# EUROPÄISCHE PATENTSCHRIFT

(11) **EP 2 257 453 B1**
(45) Veröffentlichungstag und Bekanntmachung des Hinweises auf die Patenterteilung: **10.08.2011**
(21) Anmeldenummer: 08873439.7
(22) Anmeldetag: 19.12.2008
(51) Int. Cl.: B60W 30/08, B60W 30/16, B60W 50/08, B60T 7/22, B60W 50/00, B60W 10/04, B60W 10/18

(54) **ABSTANDREGELTEMPOMAT**
ADAPTIVE CRUISE CONTROL SYSTEM
RÉGULATEUR DE VITESSE POUR LA RÉGULATION DE LA DISTANCE

(30) Priorität: 18.03.2008 DE 102008014771
(43) Veröffentlichungstag der Anmeldung: 08.12.2010
(73) Patentinhaber: WABCO GmbH, 30453 Hannover (DE)
(72) Erfinder: BREUER, Karsten, 31867 Lauenau (DE)
(74) Vertreter: Lauerwald, Jörg
(86) Internationale Anmeldenummer: PCT/EP2008/010889
(87) Internationale Veröffentlichungsnummer: WO 2009/115110

(56) Entgegenhaltungen:
- EP-A- 1 705 624
- EP-A- 1 867 516
- DE-A1- 10 231 687
- DE-A1- 10 338 565
- DE-A1- 19 640 694
- DE-A1- 19 857 992
- DE-A1-102005 045 488
- US-A1- 2004 078 133
- US-A1- 2007 142 996

## Beschreibung

Die Erfindung betrifft einen Abstandsregeltempomaten für ein Kraftfahrzeug nach dem oberbegriff des Anspruchs 1, in besondere mit einer Betriebsbremse, der eine elektrische Steuerung umfasst, die eingerichtet ist zum Erfassen von Betriebsdaten des Kraftfahrzeugs, zum Erstellen einer Bewegungsprädiktion aus den Betriebsdaten, zum Beeinflussen eines Bewegungszustands des Kraftfahrzeugs anhand der Bewegungsprädiktion und zum Ausgeben eines Warnsignals an einen Fahrer des Kraftwagens, wenn die Bewegungsprädiktion ergibt, dass unter Annahme einer vorgegebenen Grenz-Verzögerung eine Zusammenstoßwahrscheinlichkeit eines Zusammenstoßes mit einem anderen Kraftfahrzeug einen vorgegebenen Schwellenwert über-steigt, sowie ein zugehoriges verfahren

Ein derartiger Abstandsregeltempomat ist auch als ACC (adaptive cruise control, adaptive Geschwindigkeitsregelung) bekannt. Ein Abstandsregeltempomat beeinflusst den Bewegungszustand des Kraftfahrzeugs unter Berücksichtigung des Abstands zu einem vorausfahrenden Fahrzeug. Aus einer Vielzahl von Sensordaten, wie beispielsweise der eigenen Geschwindigkeit und der Relativgeschwindigkeit zu einem vorausfahrenden Fahrzeug, wird von dem Abstandsregeltempomat die Leistung des Motors gedrosselt oder es wird aktiv eine Bremsung eingeleitet, wenn der Abstand zum Vorderfahrzeug einen vorgegebenen Schwellenwert unterschreitet.

Die EP1867516A2 offenbart ein Kraftfahrzeug, umfassend ein die Geschwindigkeit des Kraftfahrzeugs regelndes Fahrerassistenzsystem und einen Motor, wobei das Fahrerassistenzsystem den Motor und/oder ein Bremssystem in Abhängigkeit von einer Sollbeschleunigung ansteuert, wobei wenigstens ein mit dem Fahrerassistenzsystem kommunizierendes Bedienelement vorgesehen ist, durch das bei Betätigung wenigstens ein insbesondere digitales Signal erzeugbar ist, wobei während der Betätigung des Bedienelements das Fahrerassistenzsystem in Abhängigkeit des ihm von dem Bedienelement übermittelten Signals zur Veränderung der Sollbeschleunigung und zur Ansteuerung des Motors und/oder des Bremssystems in Abhängigkeit von der veränderten Sollbeschleunigung ausgebildet ist.

Die gattungsbildende DE10231687A1 offenbart ein Verfahren und eine Vorrichtung zur Benachrichtigung des Fahrers eines Kraftfahrzeugs, das mit einem adaptiven Abstands- und Geschwindigkeitsregler ausgestattet ist, indem eine Übernahmeanforderung aktiviert wird, die dem Fahrer mitteilt, dass eine kritische Annäherung an ein Zielobjekt erfolgt. Die Aktivierung bzw. Deaktivierung der Übernahmeanforderung erfolgt in Abhängigkeit eines festen Mindestabstandes des abstands- und geschwindigkeitsgeregelten Fahrzeugs zum Zielobjekt und/oder eines relativgeschwindigkeitsabhängigen Mindestabstandes des abstands- und geschwindigkeitsgeregelten Fahrzeugs in Bezug auf ein Zielobjekt und/oder einer maximalen, vom Abstands- und Geschwindigkeitsregler erzeugbaren Fahrzeugverzögerung.

Die DE102005045488A1 offenbart ein Fahrerassistenzsystem zur automatischen Geschwindigkeitsregelung für ein Kraftfahrzeug mit Steuermitteln zur Längssteuerung des Kraftfahrzeugs. Zu den Steuermitteln gehören eine Motorsteuerung und eine Bremsensteuerung. Über eine Eingabevorrichtung wird eine Sollgeschwindigkeit in die Steuermittel eingegeben, die durch Motor- und/oder Bremseneingriffe die Fahrgeschwindigkeit regeln. Weiterhin sind die Mittel vorgesehen, um eine Betriebstemperatur der Fahrzeugbremse festzustellen. Eine Auswerteschaltung vergleicht die festgestellte Betriebstemperatur mit einer Grenztemperatur und erzeugt bei Überschreiten der Grenztemperatur ein Ausgangssignal. Das Ausgangssignal aktiviert eine Anzeigevorrichtung, die den Fahrer auf die erhöhte Betriebstemperatur der Fahrzeugbremse hinweist.

Abstandsregeltempomaten dienen der Unterstützung des Fahrers und sind von autonomen Notbremssystemen zu unterscheiden. Ein solches Notbremssystem ist ein elektronisches System, das ausgebildet ist, um unabhängig von dem Fahrer eine autonome Vollbremsung auszulösen. Demgegenüber besitzt ein Abstandsregeltempomat eine Grenz-Verzögerung, die durch einen Eingriff des Abstandsregeltempomaten auf das Kraftfahrzeug nicht überschritten werden darf. In anderen Worten kann der Abstandsregeltempomat das Kraftfahrzeug nicht selbsttätig stärker abbremsen als mit der Grenz-Verzögerung.

Um den Fahrer rechtzeitig aufzufordern, die Fahrzeugkontrolle wieder vom Abstandsregeltempomaten zu übernehmen, weil letzterer mit der aktuellen Verkehrssituation überfordert wäre, erstellt der Abstandsregeltempomat eine Bewegungsprädiktion. Eine Bewegungsprädiktion ist ein mathematisches Modell, das aus den Betriebsdaten des Kraftfahrzeugs, wie beispielsweise Fahrdaten in Form von dessen Geschwindigkeit und dessen Beschleunigung, sowie den Abstandsdaten zu einem vorausfahrenden Fahrzeug insbesondere den Abstand zum dem vorausfahrenden Fahrzeug in Zukunft extrapoliert. Bei bekannten Abstandsregeltempomaten wird eine Warnmeldung an den Fahrer des Kraftwagens ausgegeben, wenn die Bewegungsprädiktion ergibt, dass eine Beschleunigung, die größer ist als die vorgegebene Grenz-Verzögerung, notwendig ist, um einen Zusammenstoß mit dem Vorderfahrzeug zu vermeiden.

Nachteilig an bekannten Abstandsregeltempomat ist, dass sie den Fahrer aufgrund einer ausbleibenden Warnmeldung in Sicherheit wiegen können, obwohl sein Eingreifen dringend erforderlich wäre.

Der Erfindung liegt die Aufgabe zugrunde, einen Abstandsregeltempomat vorzuschlagen, der dem Fahrer stets rechtzeitig ein Warnsignal gibt.

Die Erfindung löst das Problem durch einen gattungsgemäßen Abstandsregeltempomaten, bei dem die elektrische Steuerung eingerichtet ist zum Erfassen von Bremsparametern, anhand derer eine mit den Betriebsbremsen erreichbare Maximal-Verzögerung errechenbar ist, und zum Verringern der Grenz-Verzögerung, wenn die Maximal-Bremsverzögerung einen vorgegebenen Schwellen-wert unterschreitet, sowie durch ein entspechendes verfahren.

Vorteilhaft hieran ist, dass das Warnsignal dann früher ausgegeben wird, wenn die Betriebsbremsen nicht in der Lage sind, ihre spezifikationsgemäße Bremsverzögerung so wenig zu erreichen, dass ein Ausbleiben des Warnsignals dem Fahrer eine trügerische Sicherheit vorgaukelt. Sind die Betriebsbremsen beispielsweise durch beständiges Bremsen heiß gelaufen, so muss das Warnsignal früher ausgegeben werden, um zu verhindern, dass der Fahrer irrtümlich der Meinung ist, der von ihm aktivierte Abstandsregeltempomat könne alleine den Abstand zum vorausfahrenden Fahrzeug sicher kontrollieren. Erhält er jedoch ein Warnsignal, so kann er von sich aus beispielsweise die Fahrgeschwindigkeit reduzieren und eine kritische Situation vermeiden.

Vorteilhaft ist zudem, dass bestehende Abstandsregeltempomaten leicht zu einem erfindungsgemäßen Abstandsregeltempomaten aufgerüstet werden können. Dazu muss lediglich das auf der elektrischen Steuerung vorgehaltene elektrische Programm geändert werden.

Im Rahmen der vorliegenden Beschreibung werden unter Betriebsdaten des Kraftfahrzeugs insbesondere Fahrdaten verstanden, nämlich Daten zur Geschwindigkeit, zur Beschleunigung bzw. zur Verzögerung. Betriebsdaten können auch Motordaten sein, beispielsweise eine Motorleistung. In anderen Worten sind die Betriebsdaten solche Daten, deren Änderung den Bewegungszustand des Kraftfahrzeugs beeinflussen. Zu den Betriebsdaten des Kraftfahrzeugs kann auch ein Lenkwinkel gehören.

Unter Abstandsdaten wird insbesondere ein Abstand zu einem vorausfahrenden Fahrzeug, eine Relativgeschwindigkeit zu dem vorausfahrenden Fahrzeug oder eine Änderung der Relativgeschwindigkeit zum vorausfahrenden Fahrzeug verstanden.

Unter der Bewegungsprädiktion wird insbesondere jeder Algorithmus verstanden, der ausgebildet ist, um aus Daten, die im Kraftfahrzeug erfasst werden, eine Prognose über den Abstand zum vorausfahrenden Fahrzeug in der näheren Zukunft, beispielsweise innerhalb der nächsten 10 Sekunden, abzuleiten. Unter dem Merkmal, dass die Zusammenstoßwahrscheinlichkeit einen vorgegebenen Schwellenwert übersteigt, ist insbesondere zu verstehen, dass der Abstandsregeltempomat ohne Eingriff des Fahrers eine Kollision mit dem vorausfahrenden Fahrzeug alleine nicht verhindern können wird und damit eine Ausgabe des Warnsignals rechtfertigt. Es ist nicht notwendig, dass eine Wahrscheinlichkeit im mathematischen Sinne berechnet und mit dem vorgegebenen Schwellenwert verglichen wird. Es ist vielmehr ausreichend, dass anhand der Bewegungsprädiktion eine Aussage darüber möglich ist, ob ein Zusammenstoß mit dem vorausfahrenden Fahrzeug droht oder nicht.

Unter einem Bremsparameter wird insbesondere jeder Parameter verstanden, der einen Rückschluss auf die maximal erreichbare Bremsverzögerung gestattet. Es ist dabei möglich, dass der Bremsparameter kontinuierliche oder diskontinuierliche Werte annimmt. Beispielsweise kann der Bremsparameter eine Temperatur der Betriebsbremse sein und damit eine kontinuierliche Größe darstellen. Es ist aber auch möglich, dass der Bremsparameter lediglich den binären Zustand kodiert, ob eine vorgegebene Temperatur der Betriebsbremsen überschritten worden ist. Es ist zudem möglich, dass mehrere Bremsparameter erfasst werden und durch in einem Digitalspeicher hinterlegten Kennfeld abgelesen wird, welche Maximal-Bremsverzögerung vorliegt. Unter einem Bremsparameter wird auch ein maximal auf ein Rad aufbringbares Drehmoment verstanden, das von einer Antischlupfregelung erfasst werden kann.

Unter einer Maximal-Bremsverzögerung wird insbesondere ein Wert verstanden, der eine Bremsverzögerung darstellt, die von den Betriebsbremsen sicher erreicht werden kann. Es muss sich dabei nicht um den höchsten, von den Betriebsbremsen erreichbaren Wert handeln. Es kann beispielsweise auch der Wert sein, der von den Betriebsbremsen erreichbar ist, ohne die Betriebsbremsen zu schädigen.

In einer bevorzugten Ausführungsform ist die elektrische Steuerung eingerichtet zum Verringern der Grenz-Verzögerung, wenn die Maximal-Bremsverzögerung die Grenz-Verzögerung unterschreitet. Das ist in anderen Worten dann der Fall, wenn der Abstandsregeltempomat intern davon ausgeht, eine vorgegebene Grenz-Verzögerung zu erreichen, dies jedoch aufgrund der Rahmenbedingungen nicht möglich ist. Würde in diesem Fall die Grenz-Verzögerung nicht verringert, so würde ein Warnsignal erst dann ausgegeben, wenn der Fahrer möglicherweise keine Möglichkeit mehr hat, einen Unfall allein durch Abbremsen noch zu verhindern.

Besonders bevorzugt ist die elektrische Steuerung eingerichtet zum Verringern der Grenz-Verzögerung auf ein Produkt der Maximal-Bremsverzögerung mit einem Sicherheitsfaktor. Dadurch wird sichergestellt, dass stets frühzeitig das Warnsignal ausgegeben wird, wenn die Maximal-Bremsverzögerung den Verzögerungs-Schwellenwert unterschreitet.

Ist beispielsweise als Grenz-Verzögerung der Wert von 2,5m/s² vorgegeben und werden Bremsparameter erfasst, aus denen die Maximal-Bremsverzögerung von 4m/s² ermittelt wird, was betragsmäßig unterhalb des beispielsweise vorgegebenen Verzögerungs-Schwellenwerts von 4,5m/s² liegt, so wird die neue Grenz-Verzögerung auf das Produkt zwischen dem beispielhaften Sicherheitsfaktor von 0,5 und der Maximal-Bremsverzögerung gesetzt, im vorliegenden Beispiel also auf 0,5*4m/s² =2m/s² . Der Fahrer wird dann bereits gewarnt, wenn sich aus der Bewegungsprädiktion ergibt, dass unter Annahme der Grenz-Verzögerung von 2m/s² ein Zusammenstoß droht und nicht erst dann, wenn bei einer angenommenen Grenz-Verzögerung von 3,5m/s² ein Zusammenstoß droht.

In einer bevorzugten Ausführungsform ist der Bremsparameter eine Temperatur einer der Betriebsbremsen oder eine Funktion der Temperaturen aller Betriebsbremsen. Es ist nicht notwendig, dass die Temperatur der Betriebsbremsen der einzige Bremsparameter ist. Heiße Betriebsbremsen können leicht zerstört werden, wenn sie über Gebühr belastet werden. Um dem Fahrer die Möglichkeit zu geben, durch ein Reduzieren der Geschwindigkeit Schäden von den Betriebsbremsen abzuwenden, wird frühzeitig das Warnsignal ausgegeben. Insbesondere wird die neue Grenz-Verzögerung so gewählt, dass sie kleiner ist als diejenige Bremsverzögerung, die zu Schäden an den Betriebsbremsen führen könnte.

Der Abstandsregeltempomat lässt sich besonders einfach aufbauen, wenn die elektrische Steuerung eingerichtet ist zum Extrahieren des Bremsparameters aus einer vom Bremssystem über einen Datenbus des Fahrzeugs versendeten EBC5-Botschaft, die in der SAE-Norm J1939-71- definiert ist.

Um bei rutschigen Straßen frühzeitig ein Warnsignal ausgeben zu können, ist gemäß einer bevorzugten Ausführungsform vorgesehen, dass die elektrische Steuerung eingerichtet ist zum Erfassen, ob ein Antiblockiersystem des Kraftfahrzeugs innerhalb eines vorgegebenen Zeitintervalls, beispielsweise von 10 Sekunden, zum Regeln der Betriebsbremse aktiv war, zum Erfassen der erreichten Bremsverzögerung von dem Antiblockiersystem und zum Ermitteln der Maximal-Bremsverzögerung aus der erreichten Bremsverzögerung. Beispielsweise ist es möglich, aus der erreichten Bremsverzögerung, die eine Funktion der Zeit ist, das Maximum, das Minimum oder einen Mittelwert zu berechnen. Der so erhaltene Wert kann gegebenenfalls mit einem Sicherheitsfaktor multipliziert werden, um die neue Grenz-Verzögerung zu erhalten.

Besonders bevorzugt ist, dass die Steuerung eingerichtet ist zum Erfassen, ob das Antiblockiersystem momentan die Betriebsbremse regelt, zum Erfassen der momentanen maximal erreichbaren Bremsverzögerung des Antiblockiersystems und zum Ermitteln der Grenz-Verzögerung aus der momentan erreichten Bremsverzögerung. Hierdurch wird sichergestellt, dass bei sich schnell ändernden Griffigkeiten der Fahrbahn stets rechtzeitig ein Warnsignal ausgegeben wird.

Der Abstandsregeltempomat lässt sich besonders einfach aufbauen, wenn die elektrische Steuerung eingerichtet ist zum Extrahieren eines Signals "ABS-Control-Active" aus der in der SAE-Norm J1939-71 definierten EBC1-Botschaft, welche vom Antiblockiersystem über einen Fahrzeugbus versendet wird und zum Ermitteln des Bremsparameters anhand von aus Raddrehzahlen- oder Rad- oder Fahrzeuggeschwindigkeiten ermittelten Verzögerungen. Ist das der Fall, wird aus den Geschwindigkeits- oder Drehzahlwerten die Beschleunigung ermittelt. Das kann beispielsweise durch numerisches ein- oder zweifaches Ableiten der Tachometerdaten nach der Zeit erfolgen.

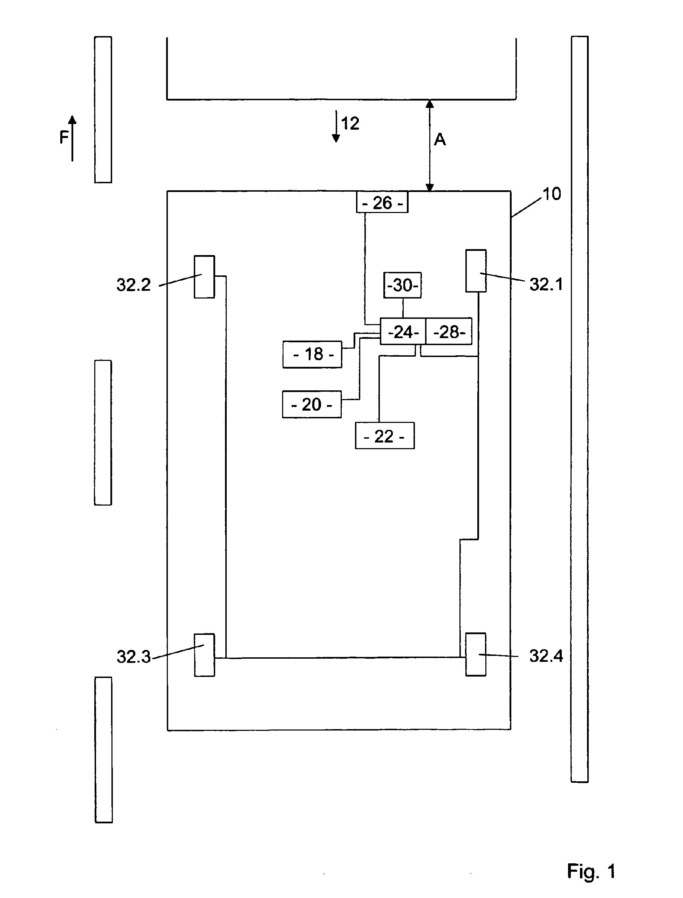

Im Folgenden wird ein Ausführungsbeispiel der Erfindung anhand der beigefügten Zeichnung näher erläutert, wobei
- Figur 1: eine schematische Ansicht eines erfindungsgemäßen Abstands- regeltempomaten für ein erfindungsgemäßes Kraftfahrzeug dar- stellt.

Figur 1 zeigt ein Kraftfahrzeug 10, das eine Vorderseite 12 besitzt und sich auf einer schematisch eingezeichneten Straße in eine Fahrtrichtung F fortbewegt. Mit einer Vorderfahrzeug-Erfassungsvorrichtung kann ein vor dem Kraftwagen 10 fahrendes Vorderfahrzeug 16 erfasst werden. Die Vorderfahrzeug-Erfassungsvorrichtung ist eingerichtet, um ihrerseits das Vorderfahrzeug 16 zu erfassen, um also eine Information darüber zu liefern, ob ein Vorderfahrzeug überhaupt vorhanden ist und um andererseits einen Abstand A zwischen der Vorderseite 12 des Kraftwagens 10 und einer Hinterseite des Vorderfahrzeugs 16 zu ermitteln.

Der Kraftwagen 10 umfasst eine Erfassungseinrichtung für Rad- und/oder Fahrzeuggeschwindigkeiten 18, die eine Fahrdaten-Erfassungsvorrichtung darstellt, die Fahrdaten in Form einer Fahrgeschwindigkeit V_{F} des Kraftwagens 10 erfasst. Der Kraftwagen 10 umfasst zudem einen Gierratensensor 20 und optional einen Verzögerungssensor 22, der beispielsweise Teil eines Airbag-Systems sein kann. Der Gierratensensor 20 und der optionale Verzögerungssensor 22 sind ebenfalls Fahrdatensensoren und erfassen Fahrdaten in Form einer Gierrate bzw. einer Verzögerung oder Beschleunigung.

Die Fahrdatensensoren 18, 20, 22 sind über eine elektrische Leitung mit einer elektrischen Steuerung 24 verbunden, die zudem mit einem Abstandssensor 26 zum Ermitteln des Abstands A verknüpft ist. Der Abstandssensor 26 erfasst in einem zeitlichen Abstand von beispielsweise 50 ms Messdaten und errechnet daraus den Abstand A zum Vorderfahrzeug 16. Aus Änderungen in Abstand A wird zudem eine Relativgeschwindigkeit vᵣₑₗₐₜᵢᵥ zwischen dem Kraftwagen 10 und dem Vorderfahrzeug 16 ermittelt, indem die Fahrgeschwindigkeit V_{F} vektoriell zu der Relativgeschwindigkeit Vᵣₑₗₐₜᵢᵥ hinzuaddiert wird.

Aus den Daten der Fahrdatensensoren 18, 20, 22, 26 erstellt die elektrische Steuerung 24 eine Bewegungsprädiktion, mittels der Abstand A und gegebenenfalls weitere Werte, wie beispielsweise die zukünftige Relativgeschwindigkeit in Abhängigkeit von der Zeit t in die Zukunft extrapoliert wird.

In einem elektrischen Speicher 28 ist eine Grenz-Verzögerung a_{grenz} abgeglegt. Die elektrische Steuerung 24 ermittelt kontinuierlich, ob das Kraftfahrzeug 10 dann, wenn es mit der Grenz-Verzögerung a_{grenz} abgebremst würde, auf das Vorderfahrzeug 16 auffahren würde. Ist das der Fall, gibt die elektrische Steuerung 24 über eine Ausgabevorrichtung 30 ein Warnsignal an einen Fahrer des Kraftwagens 10 ab. Dieses Warnsignal kann optisch, haptisch und/oder akustisch sein.

Die elektrische Steuerung steht in Kontakt mit Bremsmittel in Form von Betriebsbremsen 32.1, 32.2, 32.3, 32.4. Es ist nicht notwendig, dass vier Betriebsbremsen 32 vorhanden sind, es können bei mehrachsigen Kraftfahrzeugen auch mehr Betriebsbremsen sein. Die Betriebsbremsen 32 umfassen eine Bremssteuerung und sind über einen Datenbus 34 mit der elektrischen Steuerung 24 verbunden. Der Datenbus 34 arbeitet nach dem SAE J 1939-Standard und kommuniziert ständig mit der elektrischen Steuerung 24, die von dem Datenbus 34 Bremsparameter der Betriebsbremsen 32 erfasst. Diese Bremsparameter sind beispielsweise die Temperatur T der Betriebsbremsen, deren Funktionsbereitschaft und deren Betriebszustand, beispielsweise ob gerade ein Antiblockiersystem der Betriebsbremsen 32 aktiv ist.

Aus den Bremsparametern auf dem Datenbus 34 ermittelt die elektrische Steuerung 24 kontinuierlich eine maximal erreichbare Maximal-Bremsverzögerung aₘₐₓ, beispielsweise indem sie die empfangenen Bremsparameter mit einem Kennfeld abgleicht, das im elektrischen Speicher 28 hinterlegt ist. Ergibt sich beispielsweise, dass zumindest eine der Betriebsbremsen 32.1 bis 32.4 eine erhöhte Temperatur aufweist, aufgrund derer nur eine Maximal-Bremsverzögerung aₘₐₓ möglich ist, die die Betriebsbremsen ohne Schaden aufbringen können, die betragsmäßig kleiner ist als die Brems-Verzögerung a_{grenz}, so schreibt die elektrische Steuerung 24 einen neuen Wert für die Grenz-Verzögerung a_{grenz} in den elektrischen Speicher 28. Dieser neue Wert für die Grenz-Verzögerung a_{genz} wird erhalten durch Multiplikation der Maximal-Bremsverzögerung aₘₐₓ mit einem Sicherheitsfaktor S, der beispielsweise 0,75 betragen kann.

Ergibt sich nun, dass unter Annahme der neuen Grenz-Verzögerung a_{Grenz}, dass das Fahrzeug 10 auf das Vorderfahrzeug 16 auffahren würde, so wird ein Warnsignal ausgegeben. Der Fahrer kann dann beispielsweise die Spur wechseln oder eine Bremsung mit einer Verzögerung einleiten, die betragsmäßig oberhalb der Grenz-Verzögerung a_{grenz} liegt. Zusätzlich kann dem Fahrer angezeigt werden, dass die Betriebsbremsen 32 eine erhöhte Temperatur T haben, um ihm die Möglichkeit zu geben, beispielsweise durch Herunterschalten die Betriebsbremsen 32 zu entlasten.

Extrahiert die elektrische Steuerung 24 aus dem EBC1-Datenbussignal, dass zumindest für einige der Betriebsbremsen 32 deren Antiblockiersystem aktiv ist, so erfasst sie über den Verzögerungssensor 22 die Maximal-Bremsverzögerung aₘₐₓ. Alternativ wird die Maximal-Bremsverzögerung aₘₐₓ durch zweifaches Ableiten der Tachometerdaten der Erfassungseinrichtung für Rad- und/oder Fahrzeuggeschwindigkeit 18 errechnet. Wie oben beschrieben, ändert die elektrische Steuerung 24 den Wert für die Grenz-Verzögerung a_{grenz}, der im elektrischen Speicher 28 abgelegt ist.

Das oben beschriebene Verfahren wird kontinuierlich durchgeführt. Wenn nach einem vorgegebenen Zeitintervall die Bremsparameter dergestalt sind, dass eine Maximal-Bremsverzögerung aₘₐₓ ermittelt wird, die betragsmäßig oberhalb der standardmäßig eingestellten Grenz-Verzögerung a_{grenz} liegt, so wird im elektrischen Speicher 28 wieder der ursprüngliche Wert für die Grenz-Verzögerung a_{grenz}, von beispielsweise a_{grenz}=2.5m/s² eingestellt.

Sofern das Kraftfahrzeug 10 über eine Antischlupfregelung verfügt, kann als Bremsparameter auch ein maximal auf ein Rad aufbringbares Drehmoment erfasst werden.

## Patentansprüche

1. Abstandsregeltempomat für ein Kraftfahrzeug mit einer Betriebsbremse, der eine elektrische Steuerung (24) umfasst, die eingerichtet ist zum
(a) Erfassen von Fahrdaten des Kraftfahrzeugs und Abstandsdaten zu einem vorausfahrenden Fahrzeug,
(b) Erstellen einer Bewegungsprädiktion aus den Fahrdaten und den Abstandsdaten,
(c) Beeinflussen des Bewegungszustands des Kraftfahrzeugs durch Beeinflussung von Antriebs- oder Bremsmitteln und
(d) Ausgeben eines Warnsignals an einen Fahrer des Kraftwagens (10), wenn die Bewegungsprädiktion ergibt, dass unter Annahme einer vorgegebenden Grenz-Verzögerung (a_{grenz}) eine Zusammenstoßwahrscheinlichkeit eines Zusammenstoß mit einem anderen Kraftfahrzeug bei aktiviertem Abstandsregeltempomat ohne Eingriff eines Fahrers des Kraftwagens einen vorgegebenen Zusammenstoßwahrscheinlichkeits-Schwellenwert übersteigt,
**dadurch gekennzeichnet, dass** die elektrische Steuerung (24) eingerichtet ist
zum
(e) Erfassen von Bremsparametern, anhand derer eine mit den Betriebsbremsen erreichbare Maximal-Bremsverzögerung (aₘₐₓ) errechenbar ist, und
(f) Verringern der Grenz-Verzögerung (a_{grenz}) , wenn die Maximal-Bremsverzögerung (aₘₐₓ) einen vorgegebenen Verzögerungs-Schwellenwert unterschreitet.

2. Abstandsregeltempomat nach Anspruch 1, **dadurch gekennzeichnet, dass** der Verzögerungs-Schwellenwert die Grenz-Verzögerung ist.

3. Abstandsregeltempomat nach einem der vorstehenden Ansprüche, **dadurch gekennzeichnet, dass** die elektrische Steuerung (24) eingerichtet ist zum Verringern der Grenz-Verzögerung auf ein Produkt der Maximal-Bremsverzögerung mit einem Sicherheitsfaktor.

4. Abstandsregeltempomat nach einem der vorstehenden Ansprüche, **dadurch gekennzeichnet, dass** der Bremsparameter eine Temperatur der Betriebsbremsen und/oder ein über eine Antischlupfregelung erfasstes, maximal auf ein Rad aufbringbares Drehmoment ist.

5. Abstandsregeltempomat nach Anspruch 4, **dadurch gekennzeichnet, dass** die elektrische Steuerung eingerichtet ist zum Extrahieren des Bremsparameters aus einer EBC5-Botschaft, die das Bremssystem über einen Datenbus des Kraftfahrzeugs sendet.

6. Abstandsregeltempomat nach einem der vorstehenden Ansprüche, **dadurch gekennzeichnet, dass** die elektrische Steuerung eingerichtet ist zum
- Erfassen, ob ein Antiblockiersystem des Kraftfahrzeugs innerhalb eines vorgegebenen Zeitintervalls zum Regeln der Betriebsbremse aktiv war,
- Erfassen der erreichten Bremsverzögerung von dem Antiblockiersystem und -Ermitteln der Maximal-Bremsverzögerung aus der erreichten Bremsverzögerung.

7. Abstandsregeltempomat nach Anspruch 6, **dadurch gekennzeichnet, dass** die elektrische Steuerung eingerichtet ist zum
- Erfassen, ob das Antiblockiersystem momentan die Betriebsbremse regelt,
- Erfassen der momentan maximal erreichbaren Bremsverzögerung von dem Antiblockiersystem und
- Ermitteln der Grenz-Verzögerung aus der momentan erreichten Brems Verzögerung.

8. Abstandsregeltempomat nach Anspruch 7, **dadurch gekennzeichnet, dass** die elektrische Steuerung eingerichtet ist zum
- Extrahieren eines Signals "ABS control active" aus einer EBC1-Botschaft, welche das Antiblockiersystem über einen Datenbus des Kraftfahrzeugs sendet und
- Ermitteln des Bremsparameters aus einer anhand von Fahrzeug-und/oder Radgeschwindigkeiten ermittelten Verzögerung oder aus einer mittels eines Sensors direkt erfassten Verzögerung.

9. Kraftfahrzeug mit einem Abstandsregelautomaten nach einem der vorstehenden Ansprüche.

10. Verfahren zum Betreiben eines Abstandsregelautomaten mit den Schritten:
(a) Erfassen von Fahrdaten des Kraftfahrzeugs und Abstandsdaten zu einem vorausfahrenden Fahrzeug,
(b) Erstellen einer Bewegungsprädiktion aus den Fahrdaten und den Abstandsdaten, Beeinflussen des Bewegungszustands des Kraftfahrzeugs durch Beeinflussung von Antriebs- oder Bremsmitteln und
(c) Ausgeben eines Warnsignals an einen Fahrer des Kraftwagens, wenn die Bewegungsprädiktion ergibt, dass unter Annahme einer vorgegebenen Grenz-Verzögerung eine Zusammenstoßwahrscheinlichkeit eines Zusammenstoß mit einem anderen Kraftfahrzeug einen vorgegebenen Zusammenstoßwahrscheinlichkeits-Schwellenwert übersteigt,
(d) Berechnen einer erreichbaren Maximal-Bremsverzögerung aus Bremsparametern der Betriebsbremsen, und
(e) Verringern der Grenz-Verzögerung, wenn die Maximal-Bremsverzögerung einen vorgegebenen Verzögerungs-Schwellenwert unterschreitet.

11. Verfahren nach Anspruch 10, **dadurch gekennzeichnet, dass** es kontinuierlich wiederholt wird.

## Claims

1. Adaptive cruise controller for a motor vehicle having a service brake, which comprises an electric controller (24), which is set up to
(a) detect driving data of the motor vehicle and distance data with respect to a preceding vehicle,
(b) produce a motion prediction from the driving data and the distance data,
(c) influence the state of motion of the motor vehicle by influencing driving or braking means, and
(d) output a warning signal to a driver of the motor vehicle (10) if the motion prediction shows that, assuming a predetermined limiting deceleration (a_{grenz}), a collision probability of a collision with another motor vehicle with the adaptive cruise controller activated and without an intervention by a driver of the motor vehicle exceeds a predetermined collision probability threshold value,
**characterized in that** the electric controller (24) is set up to
(e) detect braking parameters by means of which a maximum braking deceleration (aₘₐₓ) that can be achieved with the service brakes can be calculated and
(f) reduce the limiting deceleration (a_{grenz}) if the maximum braking deceleration (aₘₐₓ) falls below a predetermined deceleration threshold value.

2. Adaptive cruise controller according to Claim 1, **characterized in that** the deceleration threshold value is the limiting deceleration.

3. Adaptive cruise controller according to one of the preceding claims, **characterized in that** the electric controller (24) is set up to reduce the limiting deceleration to a product of the maximum braking deceleration with a safety factor.

4. Adaptive cruise controller according to one of the preceding claims, **characterized in that** the braking parameter is a temperature of the service brakes and/or a maximum torque that can be applied to a wheel, which is detected by way of a closed-loop anti-slip controller.

5. Adaptive cruise controller according to Claim 4, **characterized in that** the electric controller is set up to extract the braking parameter from an EBC5 message which the brake system sends via a data bus of the motor vehicle.

6. Adaptive cruise controller according to one of the preceding claims, **characterized in that** the electric controller is set up to
- detect whether an anti-lock system of the motor vehicle has been active for the purpose of controlling the service brake within a predetermined time interval,
- detect the braking deceleration achieved by the anti-lock system and determine the maximum braking deceleration from the braking deceleration achieved.

7. Adaptive cruise controller according to Claim 6, **characterized in that** the electric controller is set up to
- detect whether the anti-lock system is currently controlling the service brake,
- detect the maximum instantaneously achievable braking deceleration by the anti-lock system, and
- determine the limiting deceleration from the instantaneously achieved braking deceleration.

8. Adaptive cruise controller according to Claim 7, **characterized in that** the electric controller is set up to
- extract an "ABS control active" signal from an EBC1 message which the anti-lock system sends via a data bus of the motor vehicle, and
- determine the braking parameter from a deceleration determined by means of linear vehicle and/or wheel speeds or from a deceleration detected directly by means of a sensor.

9. Motor vehicle having a adaptive cruise controller according to one of the preceding claims.

10. Method for operating a adaptive cruise controller having the following steps:
(a) detecting driving data of the motor vehicle and distance data with respect to a preceding vehicle,
(b) producing a motion prediction from the driving data and the distance data, influencing the state of motion of the motor vehicle by influencing driving or braking means, and
(c) outputting a warning signal to a driver of the motor vehicle if the motion prediction shows that, assuming a predetermined limiting deceleration, a collision probability of a collision with another motor vehicle exceeds a predetermined collision probability threshold value,
(d) calculating a maximum achievable braking deceleration from braking parameters of the service brakes, and
(e) reducing the limiting deceleration if the maximum braking deceleration falls below a predetermined deceleration threshold value.

11. Method according to Claim 10, **characterized in that** it is continuously repeated.

## Revendications

1. Régulateur de vitesse à régulateur de distance pour un véhicule automobile comprenant un frein de service, lequel comprend un contrôleur électrique (24) qui est configuré pour
(a) acquérir des données de circulation du véhicule automobile et des données de distance par rapport à un véhicule qui précède,
(b) établir une prévision de mouvement à partir des données de circulation et des données de distance,
(c) influencer l'état de mouvement du véhicule automobile en influençant les moyens de propulsion ou de freinage et
(d) délivrer un signal d'avertissement à un conducteur du véhicule automobile (10) lorsque la prévision de mouvement indique, en supposant un ralentissement limite prédéfini (a_{grenz}), qu'une probabilité de collision pour une collision avec un autre véhicule automobile alors que le régulateur de vitesse à régulateur de distance est activé et sans intervention d'un conducteur du véhicule automobile dépasse une valeur de seuil de probabilité de collision prédéfinie, **caractérisé en ce que** le contrôleur électrique (24) est configuré pour
(e) acquérir des paramètres de freinage au moyen desquels il est possible de calculer un ralentissement par freinage maximum (aₘₐₓ) pouvant être atteint avec le frein de service et
(f) réduire le ralentissement limite (a_{grenz}) lorsque le ralentissement par freinage maximum (aₘₐₓ) devient inférieur à une "valeur de seuil de ralentissement prédéfinie.

2. Régulateur de vitesse à régulateur de distance selon la revendication 1, **caractérisé en ce que** la valeur de seuil de ralentissement est le ralentissement limite.

3. Régulateur de vitesse à régulateur de distance selon l'une des revendications précédentes, **caractérisé en ce que** le contrôleur électrique (24) est configuré pour réduire le ralentissement limite à un produit du ralentissement par freinage maximum avec un facteur de sécurité.

4. Régulateur de vitesse à régulateur de distance selon l'une des revendications précédentes, **caractérisé en ce que** le paramètre de freinage est une température du frein de service et/ou un couple maximum pouvant être appliqué à une roue et détecté par le biais d'un régulateur antipatinage.

5. Régulateur de vitesse à régulateur de distance selon la revendication 4, **caractérisé en ce que** le contrôleur électrique est configuré pour extraire le paramètre de freinage d'un message EBC5 qui est envoyé par le système de freinage sur un bus de données du véhicule automobile.

6. Régulateur de vitesse à régulateur de distance selon l'une des revendications précédentes, **caractérisé en ce que** le contrôleur électrique est configuré pour
- détecter si un système d'antiblocage du véhicule automobile était actif pendant un intervalle de temps prédéfini pour réguler le frein de service,
- détecter le ralentissement par freinage atteint par le système d'antiblocage et
- déterminer le ralentissement par freinage maximum à partir du ralentissement par freinage atteint.

7. Régulateur de vitesse à régulateur de distance selon la revendication 6, **caractérisé en ce que** le contrôleur électrique est configuré pour
- détecter si le système d'antiblocage régule momentanément le frein de service,
- détecter le ralentissement par freinage maximum pouvant être atteint momentanément par le système d'antiblocage et
- déterminer le ralentissement limite à partir du ralentissement par freinage momentanément atteint.

8. Régulateur de vitesse à régulateur de distance selon la revendication 7, **caractérisé en ce que** le contrôleur électrique est configuré pour
- extraire un signal « régulateur ABS actif » à partir d'un message EBC1 qui est envoyé par le système d'antiblocage sur un bus de données du véhicule automobile et
- déterminer le paramètre de freinage à partir d'un ralentissement déterminé au moyen des vitesses du véhicule et/ou des roues ou à partir d'un ralentissement détecté directement au moyen d'un capteur.

9. Véhicule automobile équipé d'un régulateur de vitesse à régulateur de distance selon l'une des revendications précédentes.

10. Procédé d'exploitation d'un régulateur de vitesse à régulateur de distance comprenant les étapes suivantes :
(a) acquisition de données de circulation du véhicule automobile et de données de distance par rapport à un véhicule qui précède,
(b) établissement d'une prévision de mouvement à partir des données de circulation et des données de distance, influence de l'état de mouvement du véhicule automobile en influençant les moyens de propulsion ou de freinage et ....
(c) délivrance d'un signal d'avertissement à un conducteur du véhicule automobile lorsque la prévision de mouvement indique, en supposant un ralentissement limite prédéfini, qu'une probabilité de collision pour une collision avec un autre véhicule automobile dépasse une valeur de seuil de probabilité de collision prédéfinie,
(d) calcul du ralentissement par freinage maximum pouvant être atteint à partir de paramètres de freinage du frein de service et
(e) réduction du ralentissement limite lorsque le ralentissement par freinage maximum devient inférieur à une valeur de seuil de ralentissement prédéfinie.

11. Procédé selon la revendication 10, **caractérisé en ce qu'**il est répété continuellement.
